# EUROPÄISCHE PATENTSCHRIFT

(11) **EP 1 242 518 B1**
(45) Veröffentlichungstag und Bekanntmachung des Hinweises auf die Patenterteilung: **10.11.2004**
(21) Anmeldenummer: 00985132.0
(22) Anmeldetag: 04.12.2000
(51) Int. Cl.: C08J 9/14, C08J 9/34

(54) **VERFAHREN ZUR HERSTELLUNG VON WEICHEN BIS HALBHARTEN POLYURETHANINTEGRALSCHAUMSTOFFEN**
METHOD FOR PRODUCING SOFT TO SEMIRIGID POLYURETHANE INTEGRAL FOAMED MATERIALS
PROCEDE DE PRODUCTION DE MOUSSES POLYURETHANE INTEGRALES SOUPLES A DEMI-DURES

(30) Priorität: 16.12.1999 DE 19960779; 07.06.2000 DE 10028226
(43) Veröffentlichungstag der Anmeldung: 25.09.2002
(73) Patentinhaber: Bayer MaterialScience AG, 51368 Leverkusen (DE)
(72) Erfinder: EISEN, Norbert, 50999 Köln (DE); SEIDLITZ, Daniel, 51503 Rösrath (DE)
(86) Internationale Anmeldenummer: PCT/EP2000/012157
(87) Internationale Veröffentlichungsnummer: WO 2001/044352

(56) Entgegenhaltungen:
- EP-A- 0 765 901
- EP-A- 0 927 738
- DE-A- 19 725 360
- PATENT ABSTRACTS OF JAPAN vol. 015, no. 227 (C-0839), 10. Juni 1991 (1991-06-10) & JP 03 068619 A (ASAHI GLASS CO LTD), 25. März 1991 (1991-03-25)

## Beschreibung

Gegenstand der Erfindung ist ein Verfahren zur Herstellung von weichen bis halbharten Polyurethanformkörpern mit verdichteter Randzone mit gegebener Härte und einem deutlich weicheren Zellkern, sogenannten Integralschaumstoffen, bei denen als physikalische Treibmittel nicht brennbare Mischungen aus Fluoralkanen eingesetzt werden, die 1, 1, 1,3,3-Pentafluorbutan (R 365mfc) enthalten.

Zum Aufbau einer verdichteten Randzone mit zelliger Innenstruktur von weichen bis halbharten Polyurethanformteilen wurde bis zur Kenntnis des ozonschädigenden Verhaltens nahezu ausschließlich Monofluortrichlormethan (R 11) als Treibmittel verwendet. Nach Bekanntwerden des ozonschädlichen Verhaltens der chlorierten Kohlenwasserstoffe hat es nicht an Versuchen gefehlt, andere Arten von Treibmitteln zur Herstellung von zelligen Polyurethanen einzusetzen.

So wird in EP-A 364 854 ein Verfahren zur Herstellung von Formkörpern mit einer verdichteten Randzone und einem zelligen Kern, vorzugsweise Schuhsohlen, beschrieben aus an sich bekannten Ausgangsstoffen, jedoch unter Verwendung von niedrig siedenden aliphatischen und/oder cycloaliphatischen Kohlenwasserstoffen mit 4 bis 8 Kohlenstoffatomen im Molekül. Ein Nachteil dieser Treibgase ist jedoch ihre Brennbarkeit.

Aus EP-A 381 986 geht die Verwendung von C₃-C₅-Fluoralkanen als Treibmittel bei der Herstellung von Polyurethanschaumstoffen hervor, US-A 5 906 999 offenbart die Herstellung flexibler Integralschaumstoffe unter Verwendung von 1,1,1,3,3-Pentafluorpropan (R 245fa). Es hat sich jedoch gezeigt, dass bei der Herstellung von Integralschaumstoffen mit diesen Treibmitteln Schäume mit nicht zufriedenstellender Integralstruktur erhalten werden.

DE-A-19 725 360 offenbart ein Verfahren zur Herstellung von PU-Schaumstoffen in Gegenwart eines Treibmittelgemisches aus 1,1,1,3,3-Pentafluorbutan und einem weiteren Fluorkohlenwasserstoff.

Aufgabe der Erfindung war die Entwicklung eines Verfahrens zur Herstellung flexibler Integralschaumstoffe mit ausgeprägter Integralstruktur, die der von mit FCKW- oder HFCKW getriebenen Produkten gleichwertig ist.

Es wurde nun gefunden, dass bei Verwendung bestimmter Mischungen von Fluorkohlenwasserstoffen als Treibmittel Integralschaumstoffe erhalten werden können, die bezüglich Stauchhärte und Oberflächenhärte den R 11- bzw. R 141 b-getriebenen sowie den kohlenwasserstoffgetriebenen Systemen ebenbürtig sind. Zudem sind diese Mischungen nicht brennbar, was einen großen Vorteil für ihre Handhabung und Verarbeitung bedeutet.

Gegenstand der vorliegenden Erfindung ist daher ein Verfahren zur Herstellung von weichen bis halbharten Polyurethanformkörpern mit einer verdichteten Randzone und einem weichen, zelligen Kern, bei dem man
a) organische und/oder modifizierte organische Polyisocyanate und/oder Polyisocyanatprepolymere mit
b) mindestens einer Polyolkomponente der OH-Zahl 20 bis 200 und einer Funktionalität von 2 bis 6, bevorzugt 2 bis 3,
c) gegebenenfalls in Kombination mit einer Polyolkomponente der OH-Zahl 201 bis 899 und einer Funktionalität von 2 bis 3 sowie mit
d) mindestens einer Kettenverlängerungskomponente der OH- oder Amin-Zahl von 600 bis 1.850 und einer Funktionalität von 2 bis 4 und mit
e) gegebenenfalls an sich bekannten Zusatzstoffen, Aktivatoren und/oder Stabilisatoren
in Gegenwart von Wasser und in Gegenwart von 1,1,1,3,3-Pentafluorbutan und mindestens ein weiteres Fluoralkan enthaltenden Treibmittelgemischen umsetzt.

Bevorzugt wird 1,1,1,3,3-Pentafluorbutan (R 365mfc) im Gemisch mit 1,1,1,2-Tetrafluorethan (R 134a) oder 1,1,1,3,3-Pentafluorpropan (R 245fa) eingesetzt. Für das erfindungsgemäße Verfahren werden bevorzugt nicht brennbare Treibmittelmischungen eingesetzt. Besonders bevorzugt sind beispielsweise Mischungen von 90 bis 95 mol% R 365mfc mit 5 bis 10 mol% R 134a. In einer anderen besonders bevorzugten Variante des erfindungsgemäßen Verfahrens werden Mischungen von 40 bis 95 mol%, bevorzugt 40 bis 60 mol%, und insbesondere 45 bis 55 mol% R 365mfc mit 5 bis 60 mol%, bevorzugt 40 bis 60 mol% und insbesondere 45 bis 55 mol% R 245fa eingesetzt.

Wie zuvor erwähnt, wird bei dem erfindungsgemäßen Verfahren zusätzlich als Treibmittel noch Wasser verwendet. Die Menge an Wasser, die Polyurethan-Formulierungen zusätzlich einverleibt wird, beträgt üblicherweise 0,05 bis 0,6 Gew.-Teile, vorzugsweise 0,1 bis 0,4 Gew.-Teile, bezogen auf 100 Gew.-Teile der Komponente b) und c) (Polyolkomponenten). Die Menge an Fluorkohlenwasserstoffgemischen beträgt 0,2 bis 10 Gew.-Teile, bevorzugt 0,5 bis 8 Gew.-Teile, bezogen auf 100 Gew.-Teile der Komponenten b), c), d) und e) oder b) und d) oder b), c) und d) oder b), d) und e), je nach der jeweiligen Zusammensetzung der Umsetzungsprodukte.

Als organische Polyisocyanate a) kommen die an sich bekannten aliphatischen, cycloaliphatischen, araliphatischen und vorzugsweise aromatischen mehrwertigen Isocyanate in Frage, wie sie beispielsweise in EP-A 364 854 genannt sind. Besonders geeignet sind die Toluylendiisocyanate und die Diphenylmethandiisocyanate, deren Modifizierungsprodukte oder ihre entsprechenden Prepolymere, die durch Urethan-, Harnstoff-, Biuret-, Allophanat-, Carbodiimid- oder Uretdion-Gruppen modifiziert sein können. Insbesondere werden als aromatische Polyisocyanate genannt: 4,4-Diphenylmethandiisocyanat, Mischungen aus 2,4'- und/oder 4,4'-Diphenylmethandiisocyanat oder Roh-MDI-Typen und/oder 2,4- und/oder 2,6-Toluylendiisocyanat sowie deren Mischungen untereinander.

Als Polyolkomponente b) eignen sich solche mit einer OH-Zahl von 20 bis 200, bevorzugt 20 bis 50 und einer Funktionalität von von 2 bis 6, bevorzugt 2 bis 3, wobei entsprechende Polyetherpolyole eine zahlenmittlere Molmasse von 2 000 bis 8 000 und entsprechende Polyesterpolyole eine zahlenmittlere Molmasse von 2 000 bis 4 000 aufweisen. Gegebenenfalls können Polyole der OH-Zahl 201 bis 899 und einer Funktionalität von 2 bis 3 als Polyolkomponente c) mitverwendet werden. Insbesondere bewährt haben sich Polyole ausgewählt aus der Gruppe PolyetherPolyole und Polyester-Polyole, wie sie durch Addition von Alkylenoxiden, wie Ethylenoxid und Propylenoxid, an mehrfunktionellen Starter, wie Ethylenglykol, Propylenglykol, Glycerin, Trimethylolpropan, Sorbit und/oder Ethylendiamin oder durch Kondensation von Dicarbonsäuren wie Adipinsäure, Bernsteinsäure, Glutarsäure, Korksäure, Sebacinsäure, Maleinsäure, Phthalsäure mit überwiegend bifunktionellen Hydroxykomponenten, wie Ethylenglykol, Propylenglykol, aufgebaut aus Ethylenoxid und Propylenoxid sowie Glycerin, Trimethylolpropan, Ethyldiamin, Propylenglykol, Ethylenglykol, Sorbit und deren Gemische aus Starter. Als Polyolkomponente b) können auch modizifierte Polyole verwendet werden, wie sie durch Pfropfung von Polyolen mit Styrol und/oder Arylnitril, als Polyharnstoffdispersionen oder als PIPA-Polyole erhalten werden. Die Polyether- und Polyesterpolyole können sowohl einzeln als auch im Gemisch untereinander eingesetzt werden.

Als Komponente d) eignen sich besonders solche Kettenverlängerer, deren OH- oder Aminzahl 600 bis 1850 und deren Funktionalität 2 bis 4, insbesondere 2 bis 3 beträgt. Beispielhaft zu nennen sind hier Glykole, wie Ethylenglykol, 1,4-Butandiol, Glycerin, Trimethylolpropan und deren kurzkettige Alkoxylierungsprodukte, sowie Diethyltoluylendiamin-Isomere. Die Vemetzerkomponente (Kettenverlängerungskomponente) d) wird in Mengen von 3 bis 20 Gew.-%, bezogen auf die Summe der Mengen an Polyolkomponente b) und c) (falls vorhanden) verwendet, wobei als Diole Ethylenglykol und 1,4-Butandiol, sowie als Diamine Diethyltoluylendiamin-Isomere bevorzugt sind.

Als Komponente e) können die dem Fachmann im Prinzip bekannten Zusatzstoffe, Aktivatoren und/oder Stabilisatoren eingesetzt werden. Dies sind beispielsweise tertiäre Aminogruppen enthaltende Verbindungen, wie 1,4-Diazo[2.2.2]bicyclooctan oder Bis(2-dimethylaminoethyl)ether, Organometallverbindungen wie Dimethylzinndilaurat oder Dibutylzinndilaurat, Farbpasten, Vergilbungsschutzmittel,. Füllstoffe, Flammschutzmittel, interne Trennmittel oder Stabilisatoren, wie sie in EP-A 364 854 beschrieben sind.

Die Mengen sind abhängig vom jeweiligen Einsatzebiet und können durch Vorversuche ermittelt werden.

Die Herstellung der erfindungsgemäße Formkörper ist dem Fachmann ebenfalls bekannt und braucht im Detail nicht mehr näher beschrieben werden. Verwiesen wird in diesem Zusammenhang wiederum auf EP-A 364 854.

Die nach dem erfindungsgemäßen Verfahren hergestellten weichen bis halbharten Polyurethanschaumstoffe mit Integralstruktur besitzen in der Regel Shore A-Härten zwischen 30 und 90 in der Randzone und Stauchhärten zwischen 30 und 350 kPa bei Rohdichten zwischen 150 und 900 kg/m³.

Besonders vorteilhaft ist bei den nach dem erfindungsgemäßen Verfahren hergestellten Integralschaumstoffen die Kombination von hohen Oberflächenhärten (in Shore A) mit niedrigen Stauchhärten der Formkörper, was auf eine ausgeprägte Integralstruktur hinweist.

Einsatzbereich für die erfindungsgemäßen Formkörper sind z.B. Fahrradsättel, Sicherheitsventile, die Innenraumausstattung von Kraftfahrzeugen (Armlehnen, Kopfstützen, Lenkradummantelungen), Motorrad-Sitzbänke, Armlehnen im Büromöbelbereich sowie Behandlungsstühle im Medizinbereich.

### Beispiele

### Beschreibung der Rohstoffe

### Polyole

- Polyol 1:: Polyetherpolyol der OHZ 29 mit überwiegend primären OH-Gruppen, hergestellt durch Addition von 80 Gew.-% Propylenoxid und 20 Gew.-% Ethylenoxid an Propylenglykol als Starter.
- Polyol 2:: Polyetherpolyol der OHZ 28 mit überwiegend primären OH-Gruppen, hergestellt durch Addition von 80 Gew.-% Propylenoxid und 20 Gew.-% Ethylenoxid an Trimethyolpropan als Starter, zu 20 % gepfropft mit Styrol-Acrylnitril.
- Polyol 3:: Polyetherpolyol der OHZ 35 mit überwiegend primären OH-Gruppen, hergestellt durch Addition von 87 Gew.-% Propylenoxid und 13 Gew.-% Ethylenoxid an Trimethyolpropan als Starter.

### Polyisocyanat

Polyisocyanatprepolymer mit einem Isocyanatgehalt von 28 Gew.-%, hergestellt durch Umsetzung eines Polyisocyanatgemisches der Diphenylmethanreihe, das durch Phosgenierung eines Anilin/Formaldehydkondensates erhalten wurde und einen Isocyanatgehalt von 30 Gew.-% mit 80 Gew.-% Diisocyanatodiphenylmethan, sowie 20 Gew.-% höherkerniger Homologen aufweist, mit einem Polyether der OH-Zahl 500, hergestellt durch Addition von Propylenoxid an Propylenglykol als Starter.

### Treibmittel

| Kurzbezeichnung | Name | Molgewicht | Siedepunkt [°C] |
|---|---|---|---|
| R134a¹ | 1,1,1,2-Tetrafluorethan | 102 | -26,5 |
| R245fa ¹ | 1,1,1,3,3-Pentafluorpropan | 134 | 15 |
| R356mffm¹ | 1,1,1,4,4,4-Hexafluorbutan | 166 | 24,6 |
| R365mfc | 1,1,1,3,3-Pentafluorbutan | 148 | 40 |
| R365mfc/R134a (93:7)¹ | 1,1,1 ,3,3-Pentafluorbutan/ 1,1,1,2-Tetrafluorethan | 145** | 20 |
| R365mfc/R245fa (50:50)¹, | 1,1,1,3,3-Pentafluorbutan/ 1,1,1,3,3-Pentafluorpropan | 141** | 24 |
| R365mfc/R245fa (95:5)¹ | 1,1,1,3,3-Pentafluorbutan/ 1,1,1,3,3-Pentafluorpropan | 147,3** | 37 |
| n-Pentan | | 72 | 36 |
| i-Hexan | | 86 | 61 |

| | | | |
|---|---|---|---|
| ** mittleres Molgewicht | | | |
| ¹ besitzt nach DIN 51755 T2 keinen Flammpunkt | | | |

### Herstellung der Prüfkörper

Die nachstehend beschriebenen Rohstoffgemische werden in der für die maschinelle Verarbeitung der Polyurethane üblichen Weise in eine auf 40°C geheizte Plattenform der Größe 190 x 155 x 20 mm eingebracht, auf 250 kg/m³ verdichtet, und nach 10 Minuten entformt. Die Temperatur der Rohstoffe beträgt 25°C.

### Polyolformulierung

| | |
|---|---|
| Polyol 1 | 40,0 Gew.-Tle. |
| Polyol 2 | 35,0 Gew.-Tle. |
| Polyol 3 | 30,0 Gew.-Tle. |
| Ethylenglykol | 9,0 Gew.-Tle. |
| Wasser | 0,1 Gew.-Tle. |
| Silikonstabilisator | 0,3 Gew.-Tle. |
| (SH 205, Witco Surfactants GmbH, D-36396 Steinau) | |
| Aktivator | 0,35 Gew.-Tle. |
| (DABCO® 33 LV, Air Products GmbH, D-45527 Hattingen) | |

### Rezepturen für Probekörper

| | |
|---|---|
| Polyolformulierung A | 100 Gew.-Tle. |
| isocyanat A | 48 Gew.-Tle. |
| Treibmittel | siehe Tabelle 1 |

**Tabelle 1:**

| **Beispiele 1-8** | | | | | |
|---|---|---|---|---|---|
| Beispiel | Treibmittel | Gew.-Tle | Stauchhärte [KPa ] | Härte [Shore A] | Integralstrukturquotient |
| 1 | R 134a | 3,5^{#} | 80 | 42 | 1,90 |
| 3 | R 356mffm | 13,5 | 70 | 41 | 1,71 |
| 2 | R 245fa | 11 | 63 | 50 | 1,26 |
| **4 (Erf.)** | **R 365mfc/R 134a (93:7)** | **12** | **45** | **60** | **0,75** |
| **5 (Erf.)** | **R 365mfc/R 245fa (50:50)** | **12** | **43** | **60** | **0,71** |
| **6 (Erf.)** | **R 365mfc/R 245fa (95:5)** | **12** | **42** | **60** | **0,70** |
| 7* | R 365mfc | 12 | 41 | 60 | 0,68 |
| 8* | n-Pentan | 6 | 51 | 60 | 0,85 |
| 9* | i-Hexan | 7 | 42 | 59 | 0,71 |

| | | | | | |
|---|---|---|---|---|---|
| * brennbar; (Erf.) erfindungsgemäßes Beispiel; | | | | | |
| ^{#} in der Polyolkomponente maximal lösliche Menge Treibmittel | | | | | |

Das Eigenschaftsprofil von Integralschaumstoffen wird im besonderen Maße bestimmt durch die Oberflächenhärte (gemessen in Shore A) sowie die Stauchhärte. Vorteilhaft ist eine möglichst hohe Oberflächenhärte (hohe Rohdichte im Randbereich) verbunden mit einer im Vergleich zur Gesamtrohdichte gesehen geringen Stauchhärte. Als Maßzahl für die Bewertung der Integralstruktur kann daher der Integralstrukturquotient, ein Korrelationsfaktor aus Stauchhärte und Oberflächenhärte, herangezogen werden. Je kleiner der Wert dieses Korrelationsfraktors ist, desto besser ist die Integralstruktur.

Dieser Quotient ist, wie die Beispiele zeigen, stark abhängig von der Wahl des Treibmittels. Die mit erfindungsgemäßen Treibmittelmischungen (Beispiele 4 bis 6) erreichten Korrelationsfaktoren sind erheblich niedriger als bei Einsatz von R 134a, R 245fa oder R 356mffm und mit denen alkangetriebener Systeme vergleichbar. Zusätzlich sind die Treibmittelgemische im Gegensatz zu Alkanen oder reinem R 365mfc nicht brennbar.

## Patentansprüche

1. Verfahren zur Herstellung von weichen bis halbharten Polyurethankörpem mit einer verdichteten Randzone und einem weichen, zelligen Kern, bei dem
a) organische und/oder modifizierte organische Polyisocyanate und/oder Polyisocyanatprepolymere mit
b) mindestens einer Polyolkomponente der OH-Zahl 20 bis 200 und einer Funktionalität von 2 bis 6,
c) gegebenenfalls in Kombination mit einer Polyolkomponente mit einer OH-Zahl von 201 bis 899 und einer Funktionalität von 2 bis 3, sowie
d) mindestens einer Kettenverlängerungskomponente mit einer OH- oder Amin-Zahl von 600 bis 1.850 einer Funktionalität von 2 bis 4 und
e) gegebenenfalls an sich bekannten Zusatzstoffen, Aktivatoren und/oder Stabilisatoren
in Gegenwart von Wasser und in Gegenwart von 1,1,1,3,3-Pentafluorbutan und mindestens ein weiteres Fluoralkan enthaltenden Treibmittelgemischen umgesetzt werden.

2. Verfahren gemäß Anspruch 1, bei dem das Treibmittelgemisch 1,1,1,2-Tetrafluorethan enthält.

3. Verfahren gemäß Anspruch 2, bei dem der Anteil an 1,1,1,2-Tetrafluorethan im Treibmittelgemisch 5 bis 10 mol% beträgt.

4. Verfahren gemäß Anspruch 1, bei dem das Treibmittelgemisch 1,1,1,3,3-Pentafluorpropan enthält.

5. Verfahren gemäß Anspruch 4, bei dem der Anteil an 1,1,1,3,3-Pentafluorpropan im Treibrnittelgemisch 5 bis 60 mol% beträgt.

6. Verfahren gemäß einem der Ansprüche 1 bis 5, bei dem 3 bis 20 Gew.-% Komponente d), bezogen auf die Summe der Mengen an Polyolkomponente b) und c), eingesetzt werden.

7. Verfahren gemäß einem der Ansprüche 1 bis 6, bei dem als Komponente d) Glykole eingesetzt werden.

8. Verfahren gemäß einem der Ansprüche 1 bis 6, bei dem als Komponente d) Diethyltoluylendiamin-Isomere verwendet werden.

9. Formteile mit einer Rohdichte von 150 bis 900 kg/m³, hergestellt gemäß einem der Ansprüche 1 bis 8.

10. Formteile gemäß Anspruch 9 enthaltende Fahrradsättel, Sicherheitsventile, Armlehnen, Kopfstützen, Lenkradummantelungen, Motorrad-Sitzbänke oder Behandlungsstühle.

## Claims

1. Process for the production of flexible to semi-rigid polyurethane shaped articles with a compacted edge zone and a flexible, cellular core, in which
a) organic and/or modified organic polyisocyanates and/or polyisocyanate prepolymers are reacted with
b) at least one polyol component with an OH number of 20 to 200 and a functionality of 2 to 6,
c) optionally in combination with a polyol component with an OH number of 201 to 899 and a functionality of 2 to 3, and
d) at least one chain lengthening component with an OH or amine number of 600 to 1,850 and a functionality of 2 to 4 and
e) optionally additives, activators and/or stabilizers which are known per se
in the presence of water and in the presence of 1,1,1,3,3-pentafluorobutane and blowing agent mixtures comprising at least one further fluoroalkane.

2. Process according to claim 1, in which the blowing agent mixture comprises 1,1,1,2-tetrafluoroethane.

3. Process according to claim 2, in which the content of 1,1,1,2-tetrafluoroethane in the blowing agent mixture is 5 to 10 mol%.

4. Process according to claim 1, in which the blowing agent mixture comprises 1,1,1,3,3-pentafluoropropane.

5. Process according to claim 4, in which the content of 1,1,1,3,3-pentafluoropropane in the blowing agent mixture is 5 to 60 mol%.

6. Process according to one of claims 1 to 5, in which 3 to 20 wt.% of component d), based on the sum of the amounts of polyol components b) and c), is employed.

7. Process according to one of claims 1 to 6, in which glycols are employed as component d).

8. Process according to one of claims 1 to 6, in which diethyltoluylenediamine isomers are used as component d).

9. Mouldings with a bulk density of 150 to 900 kg/m³, produced according to one of claims 1 to 8.

10. Bicycle saddles, safety valves, arm rests, head rests, steering wheel sheathing, motorcycle seats or treatment chairs comprising mouldings according to claim 9.

## Revendications

1. Procédé de production de corps de polyuréthane souples à demi-durs, comportant une zone périphérique densifiée et un noyau cellulaire souple, dans lequel on fait réagir
a) des polyisocyanates et/ou des prépolymères de polyisocyanates organiques et/ou modifiés organiques avec
b) au moins un composant polyol possédant un indice d'hydroxyle de 20 à 200 et une fonctionnalité de 2 à 6,
c) le cas échéant, en association avec un composant polyol possédant un indice d'hydroxyle de 201 à 899 et une fonctionnalité de 2 à 3, et
d) au moins un composant prolongateur de chaîne possédant un indice d'hydroxyle ou d'amine de 600 à 1.850 et une fonctionnalité de 2 à 4 et
e) le cas échéant, des additifs, des activateurs et/ou des stabilisants connus en soi
en présence d'eau et en présence de mélanges d'agents moussants contenant du 1,1,1,3,3-pentafluorobutane et au moins un autre fluoroalcane,

2. Procédé selon la revendication 1, dans lequel le mélange d'agents moussants contient du 1,1,1,2-tétrafluoroéthane.

3. Procédé selon la revendication 2, dans lequel la proportion de 1,1,1,2-tétrafluoroéthane dans le mélange d'agents moussants est comprise entre 5 et 10 mol %.

4. Procédé selon la revendication 1, dans lequel le mélange d'agents moussants contient du 1,1,1,3,3-pentafluoropropane.

5. Procédé selon la revendication 4, dans lequel la proportion de 1,1,1,3,3-pentafluoropropane dans le mélange d'agents moussants est comprise entre 5 et 60 mol %.

6. Procédé selon une des revendications 1 à 5, dans lequel on met en oeuvre 3 à 20 % en poids du composant d), par rapport à la somme des proportions des composants polylols b) et c).

7. Procédé selon une des revendications 1 à 6, dans lequel on met en oeuvre des glycols comme composant d).

8. Procédé selon une des revendications 1 à 6, dans lequel on met en oeuvre des isomères de diéthyltoluylènediamine comme composant d).

9. Pièces moulées possédant une masse volumique apparente de 150 à 900 kg/m³, produites selon une des revendications 1 à 8.

10. Pièces moulées selon la revendication 9 comprenant des selles de bicyclettes, des soupapes de sécurité, des accoudoirs, des appui-tête, des revêtements de volants, des sièges de motocyclettes ou des fauteuils de traitement.
